# EUROPEAN PATENT SPECIFICATION

(11) **EP 1 786 176 B1**
(45) Date of publication and mention of the grant of the patent: **06.05.2009**
(21) Application number: 06023483.8
(22) Date of filing: 10.11.2006
(51) Int. Cl.: H04L 29/12

(54) **System and method for processing packet mobile-terminated calls using dynamic IP**
System und Verfahren zur Bearbeitung packetbasierender mobil-terminierter Verbindungen unter Verwendung dynamischer IP Addressierung
Système et procédé pour traiter des communications par paquets vers un terminal mobile utilisant des adresses dynamiques

(30) Priority: 10.11.2005 KR 20050107621
(43) Date of publication of application: 16.05.2007
(73) Proprietor: LG - Nortel Co., Ltd., 679, Yeoksam-dong Gangnam-gu Seoul (KR)
(72) Inventor: Baik, Woon Song, Anyang-si Gyeonggi-dol 431-760 (KR)
(74) Representative: Katérle, Axel

(56) References cited:
- WO-A-01/72007
- WO-A2-00/21254
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-SA2, no. V760, March 2001 (2001-03), XP014006097 ISSN: 0000-0001

## Description

### BACKGROUND

### 1. Field

Embodiments of the present invention may relate to a next-generation radio packet service network. More particularly, embodiments of the present invention may relate to a system and method for processing packet mobile-terminated calls using dynamic Internet Protocol (IP) in a next-generation radio packet mobile-terminated service network.

### 2. Background

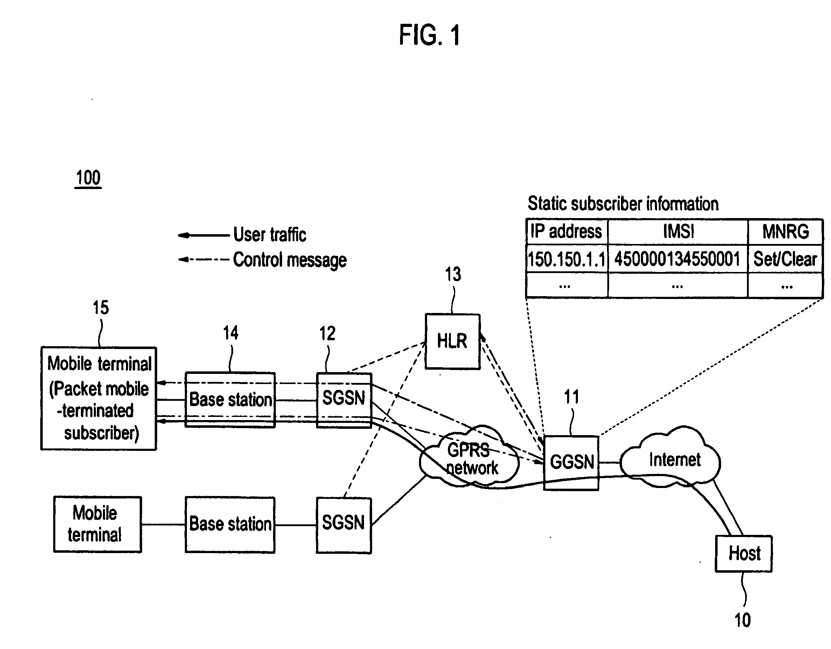

FIG. 1 illustrates a system for processing packet mobile-terminated calls for a mobile terminal in a general packet radio service (GPRS) network according to an example arrangement. Other arrangements may also be used. More specifically, FIG. 1 shows that a system 100 for processing packet mobile-terminated calls may include a host 10, a Gateway GPRS Support Node (GSSN) 11, a Serving GPRS Support Node (SGSN) 12, a Home Location Register (HLR) 13, a base station 14 and a mobile terminal 15. While FIG. 1 only labels one mobile terminal 15, one base station 14 and one SGSN 12, other mobile terminals, base stations and/or SGSN are also shown.

The host 10 may transmit user data Packet Data Protocol (PDP) (e.g., IP) PDUs (Protocol Data Units) (i.e., user traffic through the Internet). The GGSN 11 may be a gateway for interaction between the GPRS network and the Internet. The SGSN 12 may perform packet switching. The HLR 13 may manage information of subscriptions and subscribers' locations. The base station 14 may transmit packet data to the mobile terminal 15 and manage radio resources. The mobile terminal 15 may be used by subscribers to receive a radio packet data service.

In a next-generation radio packet service network, the mobile terminal 15 may be provided with a packet mobile-terminated service using static IP. The GGSN 11 may act as a gateway to store and manage static subscriber information to store International Mobile System Identifier (IMSI) and Access Point Name (APN) information, which may be necessary to search for location information of the mobile terminal 15 of packet mobile-terminated subscribers (i.e., users of the terminals).

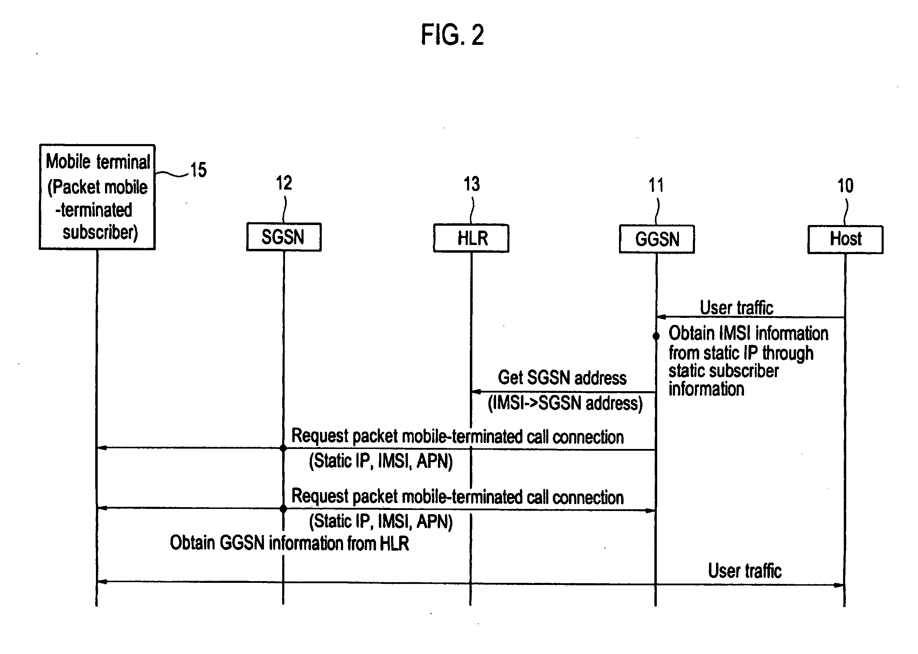

FIG. 2 illustrates processing operations of packet mobile-terminated calls using static IP in a next-generation radio packet service network according to an example arrangement. Other arrangements may also be used. The host 10 may transmit user data PDP PDU (i.e., user traffic) through the Internet to the GGSN 11 where the packet mobile-terminated subscriber 15 is located using a static IP address of the packet mobile-terminated subscriber 15. The GGSN 11 may determine whether there is information regarding the mobile subscriber session for the PDP address. If there is session information, then the GGSN 11 may encode the PDP PDU in a GPRS Tunneling Protocol-User Plain (GTP-U) format and transmit the encoded data to the SGSN 12 that provides packet service to the mobile terminal 15.

If there is no session information, then the GGSN 11 may search for static subscriber information managed by the GGSN 11 and determine whether a mobile-terminated call connection is to be tried. The GGSN 11 may use a mobile-terminated IP address, which is a PDP address of the PDP PDU, and may determine whether there is static subscriber information for the mobile-terminated IP address. When there is static subscriber information for the mobile-terminated IP address and a Mobile Not Reachable flag (MNRG) corresponding to the mobile-terminated IP address is Clear, then the GGSN 11 may retrieve IMSI information (i.e., identification information for the corresponding packet mobile-terminated subscriber 15). Then, the GGSN 11 may inquire about location information of the packet mobile-terminated subscriber by transmitting the retrieved IMSI information to the HLR 13 and receive address information of the SGSN 12 from the HLR 13 regarding where the packet mobile-terminated subscriber 15 is located.

Thereafter, by using the SGSN address information received from the HLR 13, the GGSN 11 may notify the corresponding SGSN 12 that there is a request for a mobile-terminated call connection to the corresponding packet mobile-terminated subscriber 15. At that time, the SGSN 12 may request a packet mobile-terminated call connection to the mobile terminal of the corresponding packet mobile-terminated subscriber 15 through the base station 14.

The packet mobile-terminated subscriber 15 requesting the packet mobile-terminated call connection may obtain GGSN address information from the HLR 13 through the SGSN 12 and may perform a procedure for call connection to the corresponding GGSN 11. From those procedures, a packet mobile-terminated call connection may be established. After establishment of the mobile-terminated call connection, the packet mobile-terminated subscriber 15 may receive user traffic PDP PDU from the host 10 through the Internet and the GPRS network.

In the next-generation radio packet service network, static IP may be assigned to individual mobile terminals to provide packet mobile-terminated call service when the mobile terminals subscribe to the packet mobile-terminated service. There is static subscriber information for the assigned IP in the GGSN. User data PDP PDU to be transmitted to the packet mobile-terminated service subscriber may be transmitted to the GGSN that has the corresponding static subscriber information.

In the next-generation radio packet service network, when the packet mobile-terminated service is intended to be provided using dynamic IP (not static IP), a sender may not know IP information for a corresponding service subscriber and therefore can not transmit PDP PDUs before a session is established. Even though one may know dynamic IP to be assigned to the corresponding service subscriber and GGSN information, it may be impossible, impractical or difficult to predict by which GGSN the mobile-terminated call is established since the GGSN trying mobile-terminated using dynamic IP may be different from the GGSN establishing actual connection. To request the SGSN to address the HLR, IMSI information (i.e., identification information for the packet mobile-terminated service subscriber) should be known. However, since identification for the subscriber is not static but rather is dynamic, it may be impossible, impractical or difficult to obtain the IMSI information with dynamic IP and provide packet service. As a result, there is a problem in that static IP should be used to provide packet mobile-terminated services. Due to the use of static IP, the IP resources may be inevitably dissipated. Thus, there are limits in providing the Internet service.

Further, in view of the service provider, management cost may become higher since static subscriber information for the packet mobile-terminated service subscriber should be managed in each GGSN.

WO 00/21254 discloses that in a GSM/GPRS-network a packet message from an originating node routed through a packet data network (PDN) presents a domain name system server query to the domain name system server (DNS). Upon reception of the DNS query, the domain name system server interrogates a dynamic address controller via a communication module and supplies a specific domain name. A signal entitled PDP address request is sent from the domain name system server to the dynamic address controller providing the mobile subscriber's domain name. Upon receiving the request, a dynamic address controller application module obtains an available/idle PDP address from a packet address database, changes the data of this address from available/idle to allocated and stores that dynamically allocated packet address in association with the mobile subscriber domain name and IMSI pair in a domain name/mobile ID database. A communications module sends a message to a gateway node server for the purposes of updating the GPRS subscription with a new PDP address associated with the mobile IMSI. A GGSN stores this information (i.e., the IMSI and dynamic PDP address). Upon the successful update of the GPRS subscriber data in the GGSN, the gateway node server acknowledges the successful modification to the dynamic address controller 82 which then sends back to the domain name system server the domain name along with the dynamically allocated PDP address in the form of a PDP address response message. The domain name system server provides the temporarily allocated PDP address to the requesting entity by way of a domain name system server response message. Once the mobile subscriber is assigned a temporary PDP address, data package/PDUs from the originating entity are forwarded from the packet data network to the GGSN. The GGSN sends a request for routing information to the HLR and receives from the HLR the appropriate routing information including for example the appropriate SGSN, base station controller and base station where the mobile station is currently registered/located. With that routing information, the GGSN provides a PDU notification request to the identified SGSN which acknowledges that request with a . PDU notification response. The SGSN also requests a PDP context activation with the mobile subscriber.

WO 01/72007 discloses a method for initiating a call between a computer terminal and a subscriber with a mobile terminal. Therefore, the computer terminal must send a session initiation protocol (SIP) invite message to the home SIP server using the IP address of the home SIP server. If the terminal does not know the IP address, but rather knows only the SIP URL, the terminal may use the domain name part of the SIP URL to retrieve the corresponding IP address from a DNS server. At the time the home SIP server receives the SIP invite message it does not know the current location of the called subscriber. The home SIP server must therefore contact the home location register. The home SIP server sends the SIP invite message to the home location register. The home location register uses the SIP URL of the call subscriber to determine the international mobile subscriber identity (IMSI) which uniquely identifies the subscriber. The home location register then identifies the current location of the subscriber and returns this, together with the international mobile subscriber identity to the home SIP server. At the home SIP server the ACP SIP server identity is converted into an IP address using a translation table in a DNS node. Once the home SIP server knows the international mobile subscriber identity and the current location of the mobile subscriber, the home SIP server forwards a SIP invite message to the relevant ACP SIP server. The ACP SIP server buffers the SIP invite message, whilst the RNC issues a paging request to the mobile subscriber. If the mobile subscriber responds to the paging message, the ACP is notified of the response and allocates an IP address to the mobile subscriber. The buffered SIP invite message is forwarded to the subscriber using IP. The subscriber terminal can generate an appropriate SIP message which can be returned via the SIP server to the terminal of the calling party.

ETSI TS 101 344 V7.6.0 (2001-03), 3 GPP TS 03.60 version 7.6.0 release 1998 , discloses a network-requested PDP context activation procedure. A packet data protocol packet data unit is sent to a gateway GPRS support node. The gateway GPRS support node sends a routing information message for GPRS to the home location register which returns routing information. The gateway GPRS support node sends a protocol data unit notification request to the serving GPRS support node. The serving GPRS support node sends a request packet data protocol context activation message to request the mobile system to activate the indicated packet data protocol context.

The invention provides a system according to claim 1 and a method according to claim 6.

### BRIEF DESCRIPTION OF THE DRAWINGS

Arrangements and embodiments may be described in detail with reference to the following drawings in which like reference numerals refer to like elements and wherein:

FIG. 1 illustrates a system for processing packet mobile-terminated calls in a next-generation radio packet service network according to an example arrangement;

FIG. 2 illustrates processing operations of packet mobile-terminated calls using static IP in a next-generation radio packet service network according to an example arrangement;

FIG. 3 illustrates a system for processing packet mobile-terminated calls using dynamic IP in a next-generation radio packet service network according to an example embodiment of the present invention;

FIGs. 4A and 4B illustrate a mobile-terminated GGSN and a GGSN according to an example embodiment of the present invention;

FIG. 5 illustrates a mobile-terminated server according to an example embodiment of the present invention;

FIG. 6 illustrates processing operations of packet mobile-terminated calls using dynamic IP according to an example embodiment of the present invention;

FIG. 7 is a flow chart showing processing operations of a mobile-terminated server in processing packet mobile-terminated calls using dynamic IP according to an example embodiment of the present invention; and

FIG. 8 is a flow chart showing processing operations of a mobile-terminated GGSN and GGSN in processing packet mobile-terminated calls using dynamic IP according to an example embodiment of the present invention.

### DETAILED DESCRIPTION

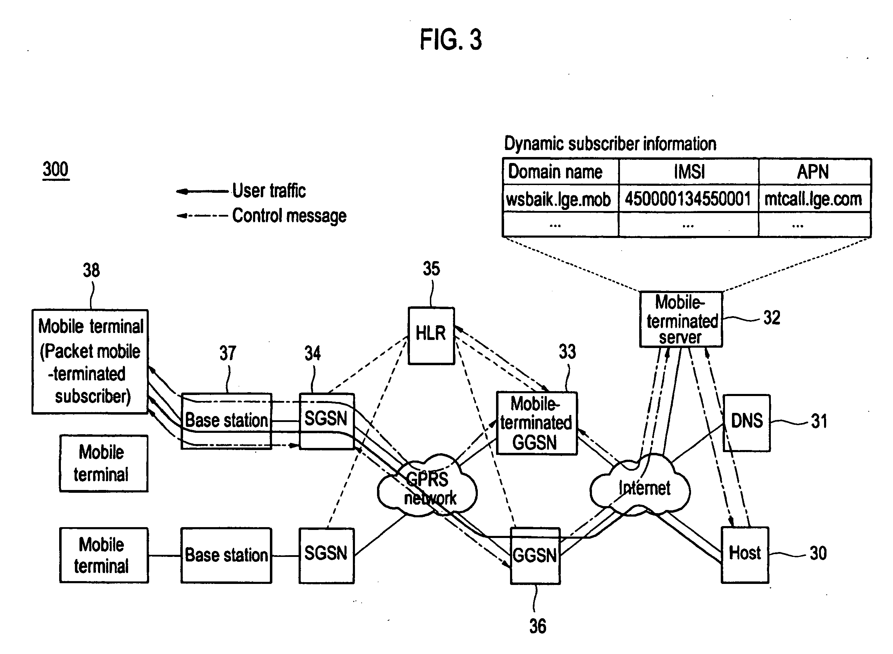

FIG. 3 illustrates a system for processing packet mobile-terminated calls using dynamic IP in a next-generation radio packet service network according to an example embodiment of the present invention. Other embodiments and configurations are also within the scope of the present invention.

More specifically, FIG. 3 shows that a system 300 for processing packet mobile-terminated calls may include an Internet host 30, a Domain Name Server (DNS) 31, a mobile-terminated server 32, a mobile-terminated GGSN 33, a SGSN 34, a HLR 35, a GGSN 36, a base station 37 and a mobile terminal (or a packet mobile-terminated subscriber) 38.

The DNS 31 may deliver a DNS query received as a domain name conversion request from the Internet host 30 to the mobile-terminated server 32. The mobile-terminated server 32 may search for dynamic subscriber information based on a domain name included in the DNS query received from the DNS 31. The mobile-terminated server 32 may retrieve IMSI and APN information, which are identification information for a mobile-terminated subscriber, and then request initiation of a packet mobile-terminated call connection and IP resolve to the GGSN 36 acting as a mobile-terminated gateway. After establishing the packet call connection, the mobile-terminated server 32 may register the dynamic IP assigned to the packet mobile-terminated subscriber 38 to the dynamic subscriber information in a conversion database (DB). The mobile-terminated server 32 may then deliver the dynamic IP information of the packet mobile-terminated subscriber 38 to the host 30, which has transmitted the corresponding DNS query through the DNS 31.

The mobile-terminated GGSN 33 may use the IMSI information (i.e., identification information for a packet mobile-terminated subscriber) received from the mobile-terminated server 32 when the mobile-terminated server 32 requests initiation of the packet mobile-terminated call connection and IP resolve for the packet mobile-terminated subscriber 38. Using the IMSI information, the mobile-terminated GGSN 33 may obtain address information of the SGSN 34 where the corresponding packet mobile-terminated subscriber 38 is located. This may be obtained from the HLR 35. The mobile-terminated GGSN 33 may request initiation of the packet mobile-terminated call connection to the corresponding SGSN 34 by adding address information of the mobile-terminated server 32 with the IMSI and APN information to a Protocol Configuration Option (PCO) field. According to the mobile-terminated request of the mobile-terminated GGSN 33, the SGSN 34 may request initiation of the packet mobile-terminated call connection by delivering the IMSI and APN information and the address information of the mobile-terminated server 32, which are received from the mobile-terminated GGSN 33, to the mobile terminal of the mobile-terminated packet subscriber 38.

During operations of the packet call connection for the packet mobile-terminated subscriber 38, the SGSN 34 may select the GGSN 36 to establish the packet mobile-terminated call using the APN information. The SGSN 34 may then request establishment of a session connection for the packet mobile-terminated call connection by delivering the IMSI and APN information of the packet mobile-terminated subscriber 38 and the address information of the mobile-terminated server 32 to the corresponding GGSN 36. The HLR 35 may manage information of a subscriber's location and subscription. According to the request of the SGSN 34 for establishment of a session connection for the packet mobile-terminated service, the GGSN 36 may assign dynamic IP to the packet mobile-terminated subscriber 38 and establish a session. Then, the GGSN 36 may transmit the dynamic IP assigned to the packet mobile-terminated subscriber 38 to the mobile-terminated server 32 and deliver subscriber traffic received from the Internet host 30 to the SGSN 34 and the base station 37. The base station 37 may deliver data to the mobile terminal 38 and manage radio resources. The mobile terminal 38 may be used by the subscriber to receive the radio packet data service.

The mobile-terminated GGSN 33 and the GGSN 36 may be logical divided so as to help explain features of embodiments of the present invention. The GGSN 33 and the GGSN 36 may be implemented as one GGSN or as different GGSNs.

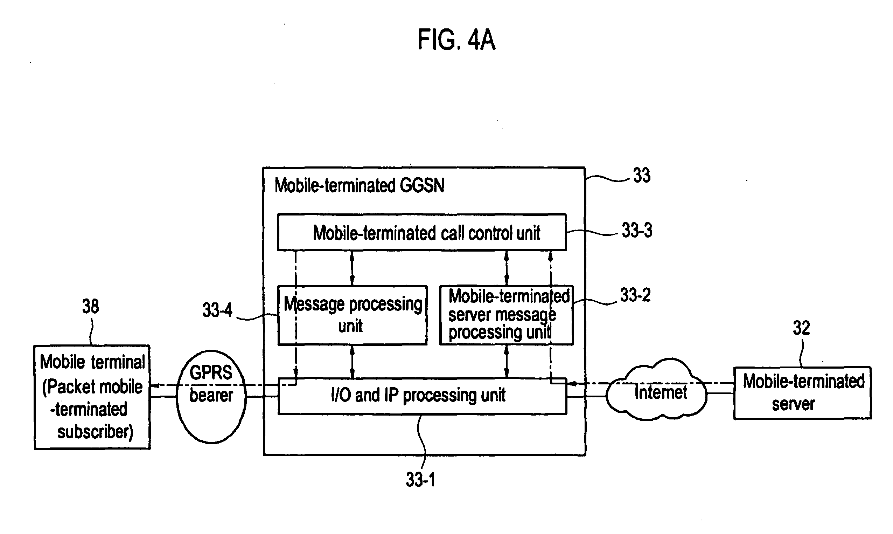

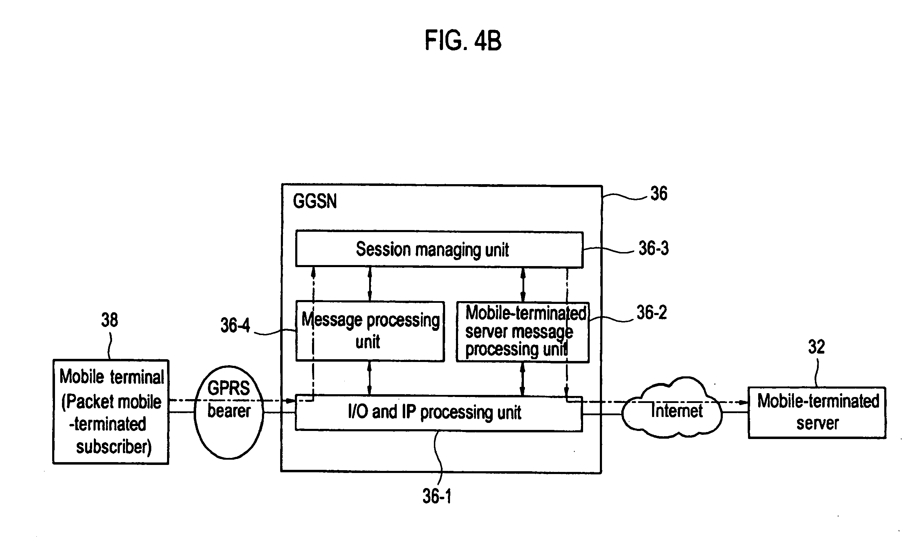

FIGs. 4A and 4B illustrate a mobile-terminated GGSN and a GGSN according to an example embodiment of the present invention. Other embodiments and configurations are also within the scope of the present invention. As shown in FIG. 4A, the mobile-terminated GGSN 33 may include an I/O and IP processing unit 33-1, a mobile-terminated server message processing unit 33-2, a mobile-terminated call control unit 33-3 and a message processing unit 33-4.

The I/O and IP processing unit 33-1 may perform internetworking and routing. The mobile-terminated server message processing unit 33-2 may process messages sent and received for interaction with the mobile-terminated server 32. The sent messages may include messages requesting initiation of a packet mobile-terminated call connection and IP resolve, messages requesting registration of dynamic IP, etc. The mobile-terminated call control unit 33-3 may search for a location of the packet mobile-terminated subscriber 38 from the HLR 35 by using identification information of the packet mobile-terminated subscriber included in messages received from the mobile-terminated server message processing unit 33-2. The mobile-terminated call control unit 33-3 may obtain address information of the SGSN where the packet mobile-terminated subscriber 38 is located and control the packet mobile-terminated call using dynamic IP. The message processing unit 33-4 may process messages of the packet mobile-terminated request for processing the packet mobile-terminated call.

As shown in FIG. 4B, the GGSN 36 may include a I/O and IP processing unit 36-1, a mobile-terminated server message processing unit 36-2, a session managing unit 36-3 and a message processing unit 36-4. The I/O and IP processing unit 36-1 may perform internetworking and routing. The mobile-terminated server message processing unit 36-2 may process messages sent and received for interaction with the mobile-terminated server 32. The sent messages may include messages requesting initiation of a packet mobile-terminated call connection and IP resolve, messages requesting registration of dynamic IP, etc. The session managing unit 36-3 may assign dynamic IP to the packet mobile-terminated subscriber 38 according to a request of session connection. The session managing unit 36-3 may perform a series of management functions for registration of the assigned dynamic IP to the mobile-terminated server 32. The message processing unit 36-4 may process messages requesting connection establishment for processing the packet mobile-terminated call. In FIGs. 4A-4B, a GPRS bearer may represent a node or nodes (i.e., a base station, a base station controller, a SGSN, etc.) for providing radio packet service.

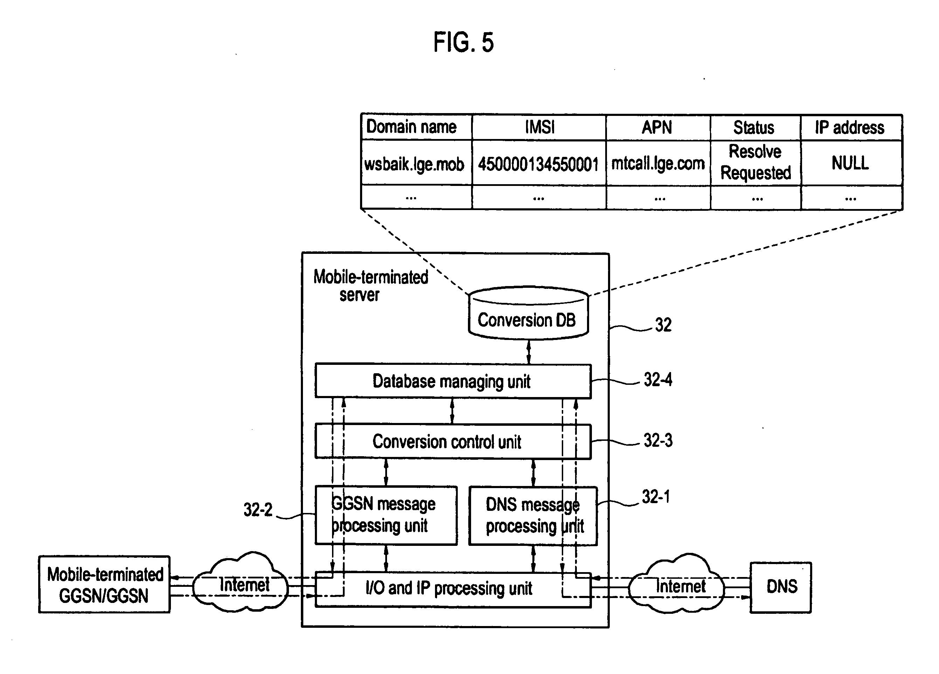

FIG. 5 illustrates a mobile-terminated server according to an example embodiment of the present invention. Other embodiments and configurations are also within the scope of the present invention. More specifically and as shown in FIG. 5, the mobile-terminated server 32 may include an I/O processing unit (unnumbered), a DNS message processing unit 32-1, a GGSN message processing unit 32-2, a conversion control unit 32-3 and a database managing unit 32-4. The DNS message processing unit 32-1 may process messages (e.g. DNS query message, response message, etc.) sent and received for interaction with the DNS 31. The GGSN message processing unit 32-2 may process messages sent and received for interaction with the GGSN 36. The sent messages may include messages requesting initiation of packet mobile-terminated call connection and IP resolve, messages requesting registration of dynamic IP, etc. The conversion control unit 32-3 may manage dynamic subscriber information in a conversion database (DB) through the database managing unit 32-4 and may manage and perform functions for converting a domain name of the packet mobile-terminated subscriber 38 to a dynamic IP address based on the dynamic subscriber information in the conversion DB. The conversion DB may be a database for saving dynamic subscriber information used in the conversion of a domain name to a dynamic IP address (i.e., a domain name), information of IMSI, APN, status, IP address, etc.

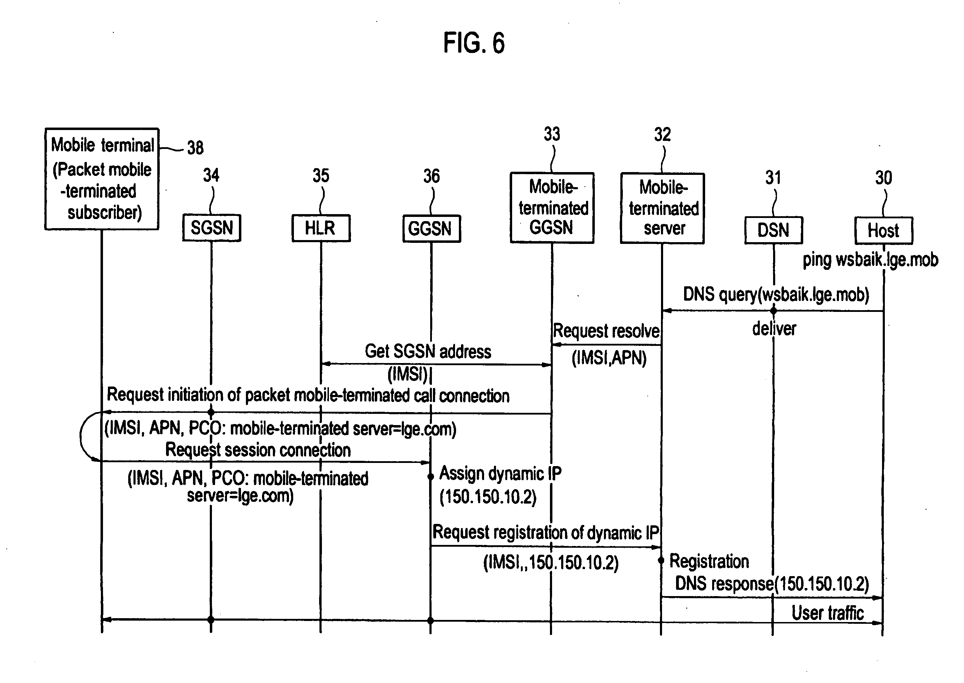

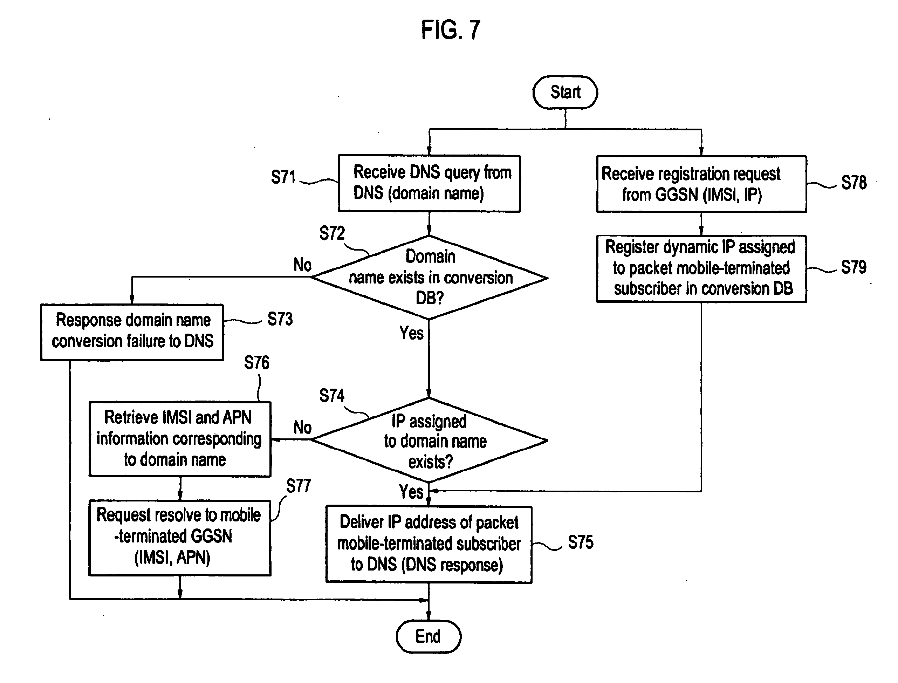

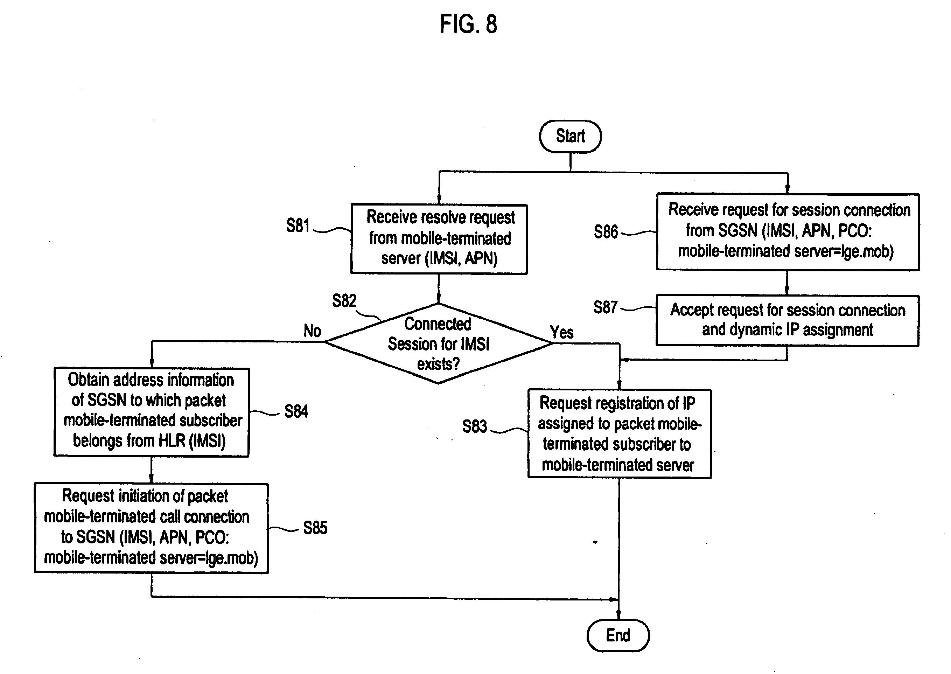

FIGs. 6 to 8 illustrate processing operations of packet mobile-terminated calls using dynamic IP in a next-generation radio packet service network according to example embodiments of the present invention. More specifically, FIG. 6 illustrates processing operations of packet mobile-terminated calls using dynamic IP according to an example embodiment of the present invention. FIG. 7 is a flow chart showing processing operations of a mobile-terminated server in processing packet mobile-terminated calls using dynamic IP according to an example embodiment of the present invention. FIG. 8 is a flow chart showing processing operations of a mobile-terminated GGSN and GGSN in processing the packet mobile-terminated calls using dynamic IP according to an example embodiment of the present invention. Other operations, orders of operations, configurations and embodiments are also within the scope of the present invention.

The Internet host 30, which is to transmit packet data to the packet subscriber using the mobile terminal 38, may transmit a DNS query to obtain an IP address corresponding to the domain name of the corresponding mobile packet subscriber. The DNS 31 may deliver the DNS query including the domain name to the mobile-terminated server 32.

In operation S71, the mobile-terminated server 32 may receive the DNS query including the domain name from the DNS 31. In operation S72, the mobile-terminated server 32 may determine whether a corresponding domain name exists by searching for dynamic subscriber information in the conversion DB based on domain name information included in the DNS query. When the domain name does not exist, the mobile-terminated server 32 may respond that the domain name does not exist (i.e., domain name conversion failed) to the DNS 31 in operation S73.

However, when the domain name of the corresponding packet mobile-terminated subscriber 38 exists as a result of searching dynamic subscriber information in the conversion DB, the mobile-terminated server 32 may determine whether an IP address assigned to the domain name exists in operation S74. When an IP address assigned to the domain name exists in operation S74 (i.e., the packet mobile-terminated subscriber 38 has already been assigned with an IP address for other packet service), the mobile-terminated server 32 may deliver the IP address of the corresponding packet mobile-terminated subscriber 38 to the DNS 31 in operation S75 as a response to the DNS query. Then, through the DNS 31, the IP address may be delivered to the Internet host 30, which is to transmit packet data to the corresponding packet mobile-terminated subscriber 38.

When an IP address assigned to the domain name does not exist in operation S74, then the mobile-terminated server 32 may retrieve IMSI information (i.e., identification information of the subscriber corresponding to the domain name of the packet mobile-terminated subscriber 38) and APN information for selecting the SGSN 34 in operation S76. In operation S77, the mobile-terminated server 32 may request initiation of the packet mobile-terminated call connection and IP resolve by transmitting the retrieved IMSI and APN information to the mobile-terminated GGSN 33, which acts as a mobile-terminated gateway.

The mobile-terminated GGSN 33 may receive the request for initiation of the packet mobile-terminated call connection and IP resolve from the mobile-terminated server 32 in operation S81. In operation S82, the mobile-terminated GGSN 33 may determine whether a connected session exists for the IMSI information of the packet mobile-terminated subscriber 38, which is received when the resolve is requested (i.e., whether the packet mobile-terminated subscriber 38 is in packet service). When a connected session for the IMSI information of the packet mobile-terminated subscriber 38 exists, the mobile-terminated GGSN 33 may request registration of the IP address assigned to the packet mobile-terminated subscriber 38 by transmitting the IP address and the IMSI information of the packet mobile-terminated subscriber 38 to the mobile-terminated server 32 in operation S83.

When it is determined that a connected session for the IMSI information of the packet mobile-terminated subscriber 38 does not exist in operation S82, the operation may include transmitting the IMSI information (e.g., subscriber identification information of the packet mobile-terminated subscriber 38) to the HLR 35. The mobile-terminated GGSN 33 may receive address information of the SGSN where the corresponding packet mobile-terminated subscriber 38 is located in operation S84. Using the received SGSN address information, the mobile-terminated GGSN 33 may request initiation of the packet mobile-terminated call connection to the corresponding SGSN 34. At that time, the mobile-terminated GGSN 33 may transmit the address information of the mobile-terminated server 32 to the SGSN 34 with the IMSI and APN information of the packet mobile-terminated subscriber 38 by adding to a PCO field in operation S85 since the GGSN 36 on which an actual packet mobile-terminated call is established may know whether the corresponding packet mobile-terminated call is transmitted or received and information for additional features after packet mobile-terminated call establishment.

The SGSN 34 may request initiation of the packet mobile-terminated call connection by transmitting the IMSI and APN information and the address information of the mobile-terminated server 32, received from the mobile-terminated GGSN 33, to the mobile terminal 38 of the corresponding packet mobile-terminated subscriber through the base station 37. The packet mobile-terminated subscriber 38 that requested the mobile-terminated call connection may request packet connection establishment by transmitting the information (IMSI, APN, PCO: mobile-terminated server = lge.mob) that are received through the SGSN 34 to the SGSN 34. The SGSN 34 may select the GGSN 36 to which actual user traffic is transmitted based on the APN information according to procedures of requesting dynamic call connection establishment. It may then request a session connection for packet mobile-terminated call establishment delivering the IMSI and APN information of the packet mobile-terminated subscriber 38 and the address information of the mobile-terminated server 32 to the corresponding GGSN 36.

When the GGSN 36 receives a request for session connection for the packet mobile-terminated call connection from the SGSN 34 in operation S86, the GGSN 36 may establish the packet mobile-terminated call session for user traffic transmission by assigning dynamic IP to the packet mobile-terminated subscriber 38 and allowing the request of session connection in operation S87. The GGSN 36 may then request registration of the IP address assigned to the corresponding packet mobile-terminated subscriber 38 by transmitting the assigned IP and IMSI information to the mobile-terminated server 32 in operation S83.

When the mobile-terminated server 32 receives a request for registration of IP information from the GGSN 36 in operation S78, using the received IMSI and dynamic IP information, the mobile-terminated server 32 may register the dynamic IP assigned to the corresponding packet mobile-terminated subscriber 38 to dynamic subscriber information in the conversion DB in operation S79. Then, the mobile-terminated server 32 may transmit the IP address to the DNS 31 in response to the DNS query in operation 75. Thereafter, the DNS 31 may deliver the IP address to the host 30 that transmitted the DNS query. Accordingly, the host 30 may transmit user traffic to the mobile terminal of the packet mobile-terminated subscriber 38 using the corresponding dynamic IP.

Embodiments of the present invention may provide a system and a method for assigning dynamic IP (not static IP) to mobile terminals and providing packet mobile-terminated call service using dynamic IP in a next-generation radio packet service network.

Embodiments of the present invention may provide packet mobile-terminated call service using dynamic IP in a next-generation radio packet service network by which IP resources are not dissipated as compared to using static IP. Management of information for a packet service subscriber may be facilitated by which cost of service may be reduced.

Embodiments of the present invention may assign dynamic IP based on a domain name of a mobile terminal in providing radio packet mobile-terminated service using dynamic IP. Thus, the radio packet service may be used by the domain name, which may be easier to remember than a static IP address. Further, the packet service subscriber may be provided with more reliable radio packet service.

According to an example embodiment of the present invention, a system may be provided for processing packet mobile-terminated calls from an Internet host to a mobile terminal in a radio packet service network. The system may include a Domain Name Server (DNS), a mobile-terminated server, a mobile-terminated GGSN, a SGSN and a GGSN. The DNS may process a domain name conversion request from the Internet host. The mobile-terminated server may retrieve International Mobile System Identifier (IMSI) and Access Point Name (APN) information of a packet mobile-terminated subscriber by searching for dynamic subscriber information in a conversion database (DB) based on a domain name included in a DNS query received from the DNS. The mobile-terminated server may further request initiation of packet mobile-terminated call connection and IP resolve to the mobile-terminated Gateway GPRS Support Node (GGSN). Still further, the mobile-terminated server may register an IP address assigned to the packet mobile-terminated subscriber as dynamic subscriber information in the conversion DB and transmit the IP address to the DNS.

The mobile-terminated GGSN may obtain address information of the Serving GPRS Support Node (SGSN) from a Home Location Register (HLR) by using IMSI information of the packet mobile-terminated subscriber and request initiation of the packet mobile-terminated call connection by transmitting the IMSI and APN information and the address information of the mobile-terminated server. The packet mobile-terminated subscriber may belong to the SGSN. The IMSI and APN information may be received when the mobile-terminated server requests initiation of the packet mobile-terminated call connection and IP resolve.

The SGSN may request initiation of the packet mobile-terminated call connection by transmitting the IMSI and APN information and the address information of the mobile-terminated server to a mobile terminal of the packet mobile-terminated subscriber. The SGSN may select the GGSN for establishing the packet mobile-terminated call by using the APN information and request establishment of the session connection for the packet mobile-terminated call connection by transmitting the IMSI and APN information of the packet mobile-terminated subscriber and the address information of the mobile-terminated server to the selected GGSN. The IMSI and APN information and the address information of the mobile-terminated server may be received from the mobile-terminated GGSN.

The GGSN may establish a session and assign an IP address to the packet mobile-terminated subscriber according to the request for the session connection establishment from the SGSN. The GGSN may transmit the assigned IP address to the mobile-terminated server and transmit user traffic received from the Internet host to the packet mobile-terminated subscriber through the SGSN and a base station.

The mobile-terminated GGSN may include: an I/O and IP processing unit, a mobile-terminated server message processing unit, a mobile-terminated call control unit and a message processing unit. The I/O and IP processing unit may perform internetworking and routing. The mobile-terminated server message processing unit may receive and process messages requesting initiation of the packet mobile-terminated call connection and IP resolve. The messages may be received from the mobile-terminated server. The mobile-terminated call control unit may obtain the corresponding SGSN address by retrieving a location of the packet mobile-terminated subscriber from the HLR by using identification information of the packet mobile-terminated subscriber. The identification information may be included in a message received from the mobile-terminated server message processing unit. The message processing unit may transmit a message requesting initiation of the packet mobile-terminated call connection to the SGSN through the I/O and IP processing unit.

The GGSN may include an I/O and IP processing unit, a message processing unit, a session managing unit and a mobile-terminated server message processing unit. The I/O and IP processing unit may perform internetworking and routing. The message processing unit may receive and process a message requesting a session connection. The message may be received from the SGSN through the I/O and IP processing unit. The session managing unit may assign an IP address to the packet mobile-terminated subscriber according to the message requesting the session connection. Still further, the session managing unit may establish the packet mobile-terminated call session, transmit the assigned IP address with the IMSI information to the mobile-terminated server and request registration. The mobile-terminated server message processing unit may process and transmit a message requesting IP address registration to the mobile-terminated server.

The mobile-terminated server may include a DNS message processing unit, a GGSN message processing unit, a conversion control unit and a database managing unit. The DNS message processing unit may process messages of the DNS query and the response. The GGSN message processing unit may process messages requesting initiation of the packet mobile-terminated call connection, the IP resolve and the IP address registration. The conversion control unit may manage dynamic subscriber information in the conversion DB through the database managing unit, and manage and perform functions for converting the domain name of the packet mobile-terminated subscriber to an IP address based on the dynamic subscriber information in the conversion DB.

The dynamic subscriber information in the conversion DB may include a domain name of the packet service subscriber, information of the IMSI, the APN, the status and the assigned IP address.

A method may be provided for processing packet mobile-terminated calls from an Internet host to a mobile terminal in a radio packet service network. The method may include at the Internet host, transmitting a DNS query to obtain an IP address corresponding to a domain name of a packet mobile-terminated subscriber to which a packet data is transmitted.

Additionally, at a mobile-terminated server, the method may include retrieving IMSI and APN information of the packet mobile-terminated subscriber by searching for dynamic subscriber information in a conversion DB based on a domain name included in the DNS query. The method may further include requesting initiation of the packet mobile-terminated call connection and IP resolve by transmitting the IMSI and APN information to a mobile-terminated GGSN.

The method may also include the mobile-terminated GGSN requesting initiation of the packet mobile-terminated call connection by transmitting the IMSI and APN information of the packet mobile-terminated subscriber and the address information of the mobile-terminated server to a SGSN. The packet mobile-terminated subscriber may belong to the SGSN.

Still further, the method may include the SGSN performing procedures for the packet mobile-terminated call connection between the packet mobile-terminated subscriber and a GGSN by using the IMSI and APN information and the address information of the mobile-terminated server. User traffic may be transmitted to the GGSN. The IMSI and APN information and the address information may be received from the mobile-terminated GGSN.

Additionally, the method may also include the GGSN assigning an IP address to the packet mobile-terminated subscriber, establishing a session for the packet mobile-terminated call and requesting registration of the assigned IP address to the mobile-terminated server. The method may also include the mobile-terminated server registering the IP address assigned to the packet mobile-terminated subscriber as dynamic subscriber information in the conversion DB and transmitting the registered IP address to the Internet host through a DNS so that user traffic may be transmitted by using the registered IP address.

The method may further include the mobile-terminated server searching for dynamic subscriber information in the conversion DB by using the domain name information included in the DNS query, and when there is an IP address assigned to the domain name, transmitting the IP address to the Internet host without requesting IP resolve to the mobile-terminated GGSN.

The method may further include the mobile-terminated GGSN determining whether there is a connected session for the IMSI information of the packet mobile-terminated subscriber, and when there is a connected session for the IMSI information of the packet mobile-terminated subscriber, requesting registration of assigned IP address information by transmitting the IP address information assigned to the packet mobile-terminated subscriber and the IMSI information of the packet mobile-terminated subscriber to the mobile-terminated server. The IMSI information may be received when the mobile-terminated server requests initiation of the packet mobile-terminated call connection and IP resolve.

The requested initiation of the packet mobile-terminated call connection to the SGSN may include transmitting the IMSI information of the packet mobile-terminated subscriber to the HLR, wherein the IMSI information is received when the mobile-terminated server requests initiation of the packet mobile-terminated call connection and IP resolve. The requested initialization of the packet mobile-terminated call connection may also include receiving address information of the SGSN where the packet mobile-terminated subscriber is located and requesting initiation of the packet mobile-terminated call connection to the SGSN corresponding to the received SGSN address information.

The performing procedures for the packet mobile-terminated call connection between the packet mobile-terminated subscriber and the GGSN may include the SGSN requesting initiation of the packet mobile-terminated call connection by transmitting the IMSI and APN information and the address information of the mobile-terminated server received from the mobile-terminated GGSN to the mobile terminal of the corresponding packet mobile-terminated subscriber through the base station. The performing procedures may also include in the packet mobile-terminated subscriber that received the request for initiation of the packet mobile-terminated call connection, requesting packet connection establishment by transmitting the received IMSI and APN information and the address information of the mobile-terminated server to the SGSN. The performing procedures may further include in the SGSN selecting the GGSN for transmitting user traffic based on the APN information according to the procedure of requesting dynamic call connection establishment, and requesting the session connection for the packet mobile-terminated call establishment by transmitting the IMSI and APN information of the packet mobile-terminated subscriber and the address information of the mobile-terminated server to the selected GGSN.

Any reference in this specification to "one embodiment," "an embodiment," "example embodiment," etc., means that a particular feature, structure, or characteristic described in connection with the embodiment is included in at least one embodiment of the present invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A system for processing packet mobile-terminated calls in a radio packet service network, the system comprising:
a Domain Name Server (DNS) (31) to process a domain name conversion request;
**characterised by**
a mobile-terminated server (32) adapted to search dynamic subscriber information in a database based on a domain name included in a DNS query received from the DNS and to retrieve International Mobile System Identifier (IMSI) and Access Point Name (APN) information of a packet mobile-terminated subscriber, wherein the mobile-terminated server is adapted to further register an IP address assigned to the packet mobile-terminated subscriber as dynamic subscriber information in the database;
a mobile-terminated Gateway GPRS Support Node (GGSN) (33) to obtain address information of a Serving GPRS Support Node (SGSN) (34) from a Home Location Register (HLR) (35) based on the IMSI information and to transmit the IMSI and APN information and address information of the mobile-terminated server (32); and
a SGSN (34) adapted to receive the IMSI and APN information and the address information of the mobile-terminated server (32) from the mobile-terminated GGSN (33) and to transmit the IMSI and APN information and the address information of the mobile-terminated server (32) to a mobile terminal (38) of the packet mobile-terminated subscriber, the SGSN (3634) being adapted to select a GGSN (36) for establishing the packet mobile-terminated call based on the APN information and to transmit the IMSI and APN information of the packet mobile-terminated subscriber and the address information of the mobile-terminated server (32) to the selected GGSN (36) to request establishment of a session connection for the packet mobile-terminated call connection;
wherein the selected GGSN (36) is adapted to assign the IP address to the packet mobile-terminated subscriber (38) based on the request for the session connection establishment from the SGSN (34), the GGSN (36) being adapted to transmit the assigned IP address to the mobile-terminated server (32).

2. The system of claim 1, wherein the mobile-terminated GGSN (33) includes:
an I/O and IP processing unit (33-1) to perform internetworking and routing;
a mobile-terminated server message processing unit (33-2) to receive and process messages from the mobile-terminated server (32) requesting initiation of the packet mobile-terminated call connection and IP resolve;
a mobile-terminated call control unit (33-3) to retrieve a location of the packet mobile-terminated subscriber from the HLR (35) using identification information of the packet mobile-terminated subscriber and to obtain a corresponding SGSN address; and
a message processing unit to transmit a message requesting initiation of the packet mobile-terminated call connection to the SGSN (34) through the I/O and IP processing unit (33-1).

3. The system of claim 1 or 2, wherein the GGSN (36) comprises:
an I/O and IP processing unit (35-1) to perform internetworking and routing;
a message processing unit (36-4) to receive and process a message from the SGSN (34) requesting session connection;
a session managing unit (36-3) to assign the IP address to the packet mobile-terminated subscriber according to the message requesting the session connection, and to transmit the assigned IP address with the IMSI information to the mobile-terminated server; and
a mobile-terminated server message processing unit (36-2) to transmit a message requesting IP address registration to the mobile-terminated server.

4. The system of any one of claim 1 to 3, wherein the mobile-terminated server (32) includes:
a DNS message processing unit (32-1) to process query messages and response messages;
a GGSN message processing unit (32-2) to process messages requesting initiation of the packet mobile-terminated call connection and IP address registration; and
a conversion control unit (32-3) to manage dynamic subscriber information in the database and to convert the domain name of the packet mobile-terminated subscriber to the IP address based on the dynamic subscriber information in the database.

5. The system of any one of claims 1 to 4, wherein the dynamic subscriber information in the database includes a domain name of the packet service subscriber, IMSI information, APN information, status information and assigned IP address information.

6. A method of processing packet mobile-terminated calls in a radio packet service network (300), comprising:
transmitting a DNS query to obtain an IP address corresponding to a domain name of a packet mobile-terminated subscriber (38);
**characterised by**
at a mobile-terminated server (32), searching dynamic subscriber information in a database based on a domain name included in the DNS query so as to retrieve IMSI and APN information of the packet mobile-terminated subscriber (38) and transmitting the IMSI and APN information to a mobile-terminated GGSN (33);
transmitting the IMSI and APN information of the packet mobile-terminated subscriber (38) and address information of the mobile-terminated server (32) from the mobile-terminated GGSN (33) to a SGSN (34);
performing the packet mobile-terminated call connection at the SGSN (34) between the packet mobile-terminated subscriber (38) and a selected GGSN (36) using the IMSI and APN information and the address information of the mobile-terminated server (32), wherein the IMSI and APN information and the address information are received from the mobile-terminated GGSN (33);
at the selected GGSN (36), assigning an IP address to the packet mobile-terminated subscriber (38), establishing a session for the packet mobile-terminated call and requesting registration of the assigned IP address; and
at the mobile-terminated server (32), registering the IP address assigned to the packet mobile-terminated subscriber (38) as dynamic subscriber information in the database and transmitting the registered IP address to an Internet host so that user traffic may be transmitted using the registered IP address.

7. The method of claim 6, further comprising:
searching the dynamic subscriber information in the database using the domain name information included in the DNS query, and when an IP address assigned to the domain name exists, transmitting the IP address to the Internet host without requesting IP resolve.

8. The method of claim 6 or 7, further comprising:
determining whether a connected session for the IMSI information of the packet mobile-terminated subscriber exists, and when a connected session for the IMSI information of the packet mobile-terminated subscriber exists, transmitting information of an IP address assigned to the packet mobile-terminated subscriber and the IMSI information of the packet mobile-terminated subscriber to the mobile-terminated server (32) to request registration of the IP address.

9. The method of any one of claims 6 to 8, further comprising requesting initiation of the packet mobile-terminated call connection by:
transmitting the IMSI information of the packet mobile-terminated subscriber (38) to the HLR (3635), wherein the IMSI information is received when the mobile-terminated server (32) requests the initiation of the packet mobile-terminated call connection and IP resolve;
receiving the address information of the SGSN (34) where the packet mobile-terminated subscriber (38) is located; and
requesting initiation of the packet mobile-terminated call connection to the SGSN (36) corresponding to the received SGSN address information.

10. The method of any one of claims 6 to 9, wherein the performing procedures for packet mobile-terminated call connection between the packet mobile-terminated subscriber and a GGSN (36) includes:
transmitting the IMSI and APN information and the address information of the mobile-terminated server received from the mobile-terminated GGSN (33) to the mobile terminal (38) of the corresponding packet mobile-terminated subscriber to request initiation of the packet mobile-terminated call connection;
at the packet mobile-terminated subscriber (38), transmitting the received IMSI and APN information and the address information of the mobile-terminated server (32) to the SGSN (3634) to request the packet connection establishment; and
at the SGSN (34), selecting the GGSN (36) for transmitting user traffic based on the APN information according to the requested dynamic call connection establishment and transmitting the IMSI and APN information of the packet mobile-terminated subscriber and the address information of mobile-terminated server (32) to the selected GGSN (36) to request session connection for packet mobile-terminated call establishment.

## Patentansprüche

1. System zum Verarbeiten eingehender mobiler Paketanrufe in einem Funkpaketdienstnetzwerk, wobei das System aufweist:
einen Domänen-Namen-Server DNS (31) zum Verarbeiten einer Aufforderung zum Umwandeln eines Domänennamens;
**gekennzeichnet durch**
einen Server für einen eingehenden Mobilanruf (32), der dazu ausgebildet ist, dynamische Teilnehmerinformation in einer Datenbank basierend auf einem Domänennamen, der in einer von dem DNS erhaltenen DNS-Anforderung enthalten ist, zu suchen und die internationale Mobilsystemkennung IMSI und Information über einen Zugangspunktnamen APN eines Teilnehmers, bei dem der mobile Paketanruf eingeht, abzurufen, wobei der Server für einen eingehenden Mobilanruf dazu ausgebildet ist, ferner eine IP-Adresse zu registrieren, die dem Teilnehmer, bei dem der mobile Paketanruf eingeht, als dynamische Teilnehmerinformation in der Datenbank zugewiesen ist;
einen Gateway-GPRS-Unterstützungsknoten GGSN (33) für einen eingehenden Mobilanruf zum Erhalten einer Adressinformation eines als Server arbeitenden GPRS-Unterstützungsknotens SGSN (34) von einem Heimatortregister HLR (35) basierend auf der IMSI-Information und zum Senden der IMSI- und APN-Information sowie Adressinformation des Servers für einen eingehenden Mobilanruf (32); und
einen SGSN (34), der dazu ausgebildet ist, die IMSI- und APN-Information und die Adressinformation des Servers für einen eingehenden Mobilanruf (32) von dem GGSN für einen eingehenden Mobilanruf (33) zu erhalten und die IMSI- und APN-Information und die Adressinformation des Servers für einen eingehenden Mobilanruf (32) zu einem mobilen Endgerät (38) des Teilnehmers zu senden, bei dem der mobile Paketanruf eingeht, wobei der SGSN (34) dazu ausgebildet ist, einen GGSN (36) zum Aufbauen eines eingehenden mobilen Paketanrufs basierend auf der APN-Information auszuwählen und die IMSI- und APN-Information des Teilnehmers, bei dem der mobile Paketanruf eingeht, und die Adressinformation des Servers für einen eingehenden Mobilanruf (32) zu dem ausgewählten GGSN (36) zu senden, um den Aufbau einer Session-Verbindung für die eingehende mobile Paketanrufverbindung anzufordern;
wobei der ausgewählte GGSN (36) dazu ausgebildet ist, die IP-Adresse dem Teilnehmer (38), bei dem der mobile Paketanruf eingeht, basierend auf der Anforderung für den Session-Verbindungs-Aufbau von dem SGSN (34) zuzuweisen, wobei der GGSN (36) dazu ausgebildet ist, die zugewiesene IP-Adresse dem Server für einen eingehenden Mobilanruf (32) zu senden.

2. System nach Anspruch 1, wobei der GGSN für einen eingehenden Mobilanruf (33) aufweist:
eine I/O- und IP-Verarbeitungseinheit (33-1), um als Verbindungsnetz zu arbeiten und ein Routing durchzuführen;
eine Servernachrichtverarbeitungseinheit für einen eingehenden Mobilanruf (33-2) zum Empfangen und Verarbeiten von Nachrichten von dem Server für einen eingehenden Mobilanruf (32), die den Aufbau einer eingehenden mobilen Paketanrufverbindung und das Auflösen der IP-Adresse anfordern;
eine Anrufsteuerungseinheit für einen eingehenden Mobilanruf (33-3) zum Erhalten eines Ortes des Teilnehmers, bei dem der mobile Paketanruf eingeht, von dem HLR (35) unter Verwendung der Identifikationsinformation des Teilnehmers, bei dem der mobile Paketanruf eingeht, und zum Erhalten einer entsprechenden SGSN-Adresse; und
eine Nachrichtverarbeitungseinheit zum Senden einer Nachricht, die den Aufbau einer eingehenden mobilen Paketanrufverbindung erfordert, zum SGSN (34) durch die I/O- und IP-Verarbeitungseinheit (33-1).

3. System nach Anspruch 1 oder 2, wobei der GGSN (36) umfasst:
eine I/O- und IP-Verarbeitungseinheit (35-1), um als Netzwerkverbindung zu arbeiten und ein Routing durchzuführen;
eine Nachrichtverarbeitungseinheit (36-4) zum Erhalten und Verarbeiten einer Nachricht vom SGSN (34) zum Anfordern einer Session-Verbindung;
eine Session-Verwaltungseinheit (36-3) zum Zuweisen der IP-Adresse zu dem Teilnehmer, bei dem der mobile Paketanruf eingeht, entsprechend der die Session-Verbindung anfordernden Nachricht und zum Senden der zugewiesenen IP-Adresse mit der IMSI-Information zum Server für einen eingehenden Mobilanruf; und
eine Servernachrichtverarbeitungseinheit für einen eingehenden Mobilanruf (36-2) zum Senden einer eine IP-Adressregistrierung anfordernde Nachricht zu dem Server für einen eingehenden Mobilanruf.

4. System nach einem der Ansprüche 1 bis 3, wobei der Server für einen eingehenden Mobilanruf (32) umfasst:
eine DNS-Nachrichtverarbeitungseinheit (32-1) zum Verarbeiten der Abfragenachrichten und der Antwortnachrichten;
eine GGSN-Nachrichtverarbeitungseinheit (32-2) zum Verarbeiten der Nachrichten, die einen Aufbau einer eingehenden mobilen Paketanrufverbindung und die Registrierung der IP-Adresse anfordern; und
eine Umwandlungssteuerungseinheit (32-3) zum Verwalten dynamischer Teilnehmerinformation in der Datenbank und zum Umwandeln des Domänennamens des Teilnehmers, bei dem der mobile Paketanruf eingeht, in die IP-Adresse basierend auf der dynamischen Teilnehmerinformation in der Datenbank.

5. System nach einem der Ansprüche 1 bis 4, wobei die dynamische Teilnehmerinformation in der Datenbank einen Domänennamen des Paketdienstteilnehmers, IMSI-Information, APN-Information, Statusinformation und Information über eine zugewiesene IP-Adresse umfasst.

6. Verfahren zum Verarbeiten eingehender mobiler Paketanrufe in einem Funkpaketdienstnetzwerk (300), mit den folgenden Schritten:
Senden einer DNS-Abfrage zum Erhalten einer IP-Adresse, die einem Domänennamen eines Teilnehmers (38) entspricht, bei dem der mobile Paketanruf eingeht;
**gekennzeichnet durch**
Suchen an einem Server für einen eingehenden Mobilanruf (32) von dynamischer Teilnehmerinformation in einer Datenbank basierend auf einem in der DNS-Abfrage enthaltenen Domänennamen, um IMSI- und APN-Information des Teilnehmers (38) abzurufen, bei dem der mobile Paketanruf eingeht, und die IMSI- und APN-Information zu einem GGSN für einen eingehenden Mobilanruf (33) zu senden;
Senden der IMSI- und APN-Information des Teilnehmers (38), bei dem der mobile Paketanruf eingeht, und der Adressinformation des Servers für einen eingehenden Mobilanruf (32) von dem GGSN für einen eingehenden Mobilanruf (33) zu einem SGSN (34);
Durchführen der eingehenden mobilen Paketanrufverbindung bei der SGSN (34) zwischen dem Teilnehmer (38), bei dem der mobile Paketanruf eingeht, und einer ausgewählten GGSN (36) unter Verwendung der IMSI- und APN-Information und der Adressinformation des Servers für einen eingehenden Mobilanruf (32), wobei die IMSI- und APN-Information und die Adressinformation vom GGSN für einen eingehenden Mobilanruf (33) erhalten werden;
Zuweisen einer IP-Adresse in dem ausgewählten GGSN (36) zum Teilnehmer (38), bei dem ein mobiler Paketanruf eingeht, Aufbauen einer Session für den eingehenden mobilen Paketanruf und Anfordern der Registrierung der zugewiesenen IP-Adresse; und
Registrieren der IP-Adresse im Server für einen eingehenden Mobilanruf (32), die dem Teilnehmer (38), bei dem der mobile Paketanruf eingeht, zugewiesen ist, als dynamische Teilnehmerinformation in der Datenbank und Senden der registrierten IP-Adresse an einen Internet-Host, so dass der Datenverkehr des Nutzers unter Verwendung der registrierten IP-Adresse gesendet werden kann.

7. Verfahren nach Anspruch 6, ferner aufweisend:
Suchen der dynamischen Teilnehmerinformation in der Datenbank unter Verwendung der in der DNS-Abfrage enthaltenen Domänennameninformation und, falls eine dem Domänennamen zugewiesene IP-Adresse existiert, Senden der IP-Adresse zum Internet-Host, ohne dass ein Auflösen der IP-Adresse angefordert wird.

8. Verfahren nach Anspruch 6 oder 7, ferner aufweisend:
Bestimmen, ob eine verbundene Session für die IMSI-Information des Teilnehmers, bei dem der mobile Paketanruf eingeht, vorhanden ist, und, falls eine verbundene Session für die IMSI-Information des Teilnehmers, bei dem der mobile Paketanruf eingeht, besteht, Senden einer Information über eine IP-Adresse, die dem Teilnehmer zugewiesen ist, bei dem der mobile Paketanruf eingeht, und der IMSI-Information des Teilnehmers, bei dem der mobile Paketanruf eingeht, zu dem Server für einen eingehenden Mobilanruf (32) zum Anfordern der Registrierung der IP-Adresse.

9. Verfahren nach einem der Ansprüche 6 bis 8, ferner aufweisend das Anfordern des Aufbaus einer eingehenden mobilen Paketanrufverbindung durch:
Senden der IMSI-Information des Teilnehmers (38), bei dem der mobile Paketanruf eingeht, zum HLR (35), wobei die IMSI-Information empfangen wird, wenn der Server für einen eingehenden Mobilanruf (32) den Aufbau einer eingehenden mobilen Paketanrufverbindung und das Auflösen der IP-Adresse anfordert;
Empfangen der Adressinformation des SGSN (34), wo sich der Teilnehmer (38), bei dem der mobile Paketanruf eingeht, befindet; und
Anfordern des Aufbaus der eingehenden mobilen Paketanrufverbindung zu dem SGSN (36) entsprechend der empfangenen SGSN-Adressinformation.

10. Verfahren nach einem der Ansprüche 6 bis 9, wobei die durchgeführten Prozeduren für eine eingehende mobile Paketanrufverbindung zwischen dem Teilnehmer, bei dem der mobile Paketanruf eingeht, und einer GGSN (36) folgende Schritte umfassen:
Senden der IMSI- und APN-Information und der Adressinformation des Servers für einen eingehenden Mobilanruf, die von dem GGSN für einen eingehenden Mobilanruf (33) erhalten werden, zum mobilen Endgerät (38) des entsprechenden Teilnehmers, bei dem der mobile Paketanruf eingeht, um den Aufbau einer eingehenden mobilen Paketanrufverbindung anzufordern;
Senden bei dem Teilnehmer (38), bei dem der mobile Paketanruf eingeht, der empfangenen IMSI- und APN-Information und der Adressinformation des Servers für einen eingehenden Mobilanruf (32) zum SGSN (34), um den Aufbau der Paketverbindung anzufordern; und
Auswählen der GGSN (36) in der SGSN (34) zum Senden des Netzwerkverkehrs eines Nutzers basierend auf der APN-Information entsprechend dem angeforderten dynamischen Anrufverbindungsaufbau und Senden der IMSI- und APN-Information des Teilnehmers, bei dem der mobile Paketanruf eingeht, und der Adressinformation des Servers für einen eingehenden Mobilanruf (32) zum ausgewählten GGSN (36), um eine Session-Verbindung für einen eingehenden mobilen Paketanrufaufbau anzufordern.

## Revendications

1. Système de traitement de communications par paquets vers un terminal mobile dans un réseau de service radio par paquets, le système comprenant :
un serveur de noms de domaine DNS (31) destiné à traiter une demande de conversion de nom de domaine ;
**caractérisé par**
un serveur (32) pour terminaux mobiles adapté à rechercher une information dynamique d'abonné dans une base de données en se basant sur un nom de domaine inclus dans une interrogation par le DNS reçue du DNS et à retrouver un Identificateur International de Système Mobile IMSI et une information de Nom de Point d'Accès APN d'un abonné par paquets à terminal mobile, dans lequel le serveur pour terminaux mobiles est adapté en outre à enregistrer une adresse Internet affectée à l'abonné par paquets à terminal mobile en tant qu'information dynamique d'abonné dans la base de données ;
un Noeud de Support Passerelle GPRS GGSN (33) pour terminaux mobiles destiné à obtenir une information d'adresse d'un Noeud de Support de Service GPRS SGSN (34) à partir d'un Enregistreur de Localisation Nominal HLR (35) en se basant sur l'information IMSI et à transmettre les informations IMSI et APN et l'information d'adresse du serveur (32) pour terminaux mobiles ; et
un SGSN (34) adapté à recevoir les informations IMSI et APN et l'information d'adresse du serveur (32) pour terminaux mobiles depuis le GGSN pour terminaux mobiles (33) et à transmettre les informations IMSI et APN et l'information d'adresse du serveur (32) pour terminaux mobiles à un terminal mobile (38) de l'abonné par paquets à terminal mobile, le SGSN (34) étant adapté à sélectionner un GGSN (36) afin d'établir l'appel par paquets vers un terminal mobile en se basant sur l'information APN et de transmettre les informations IMSI et APN de l'abonné par paquets à terminal mobile et l'information d'adresse du serveur (32) pour terminaux mobiles au GGSN (36) sélectionné afin de demander l'établissement d'une connexion de session pour la connexion de l'appel par paquets à terminal mobile ;
dans lequel le GGSN (36) sélectionné est adapté à affecter l'adresse Internet à l'abonné (38) par paquets à terminal mobile en se basant sur la demande d'établissement de connexion de session issue du SGSN (34), le GGSN (36) étant adapté à transmettre l'adresse Internet affectée au serveur (32) pour terminaux mobiles.

2. Système selon la revendication 1, dans lequel le GGSN (33) pour terminaux mobiles inclut :
une unité (33-1) de traitement d'entrée/sortie et d'adresse Internet destinée à exécuter les tâches Internet et l'acheminement ;
une unité (33-2) de traitement des messages du serveur pour terminaux mobiles destinée à recevoir et à traiter les messages issus du serveur (32) pour terminaux mobiles demandant l'initialisation de la connexion de l'appel vers le terminal mobile et la conversion de l'adresse Internet ;
une unité (33-3) de commande des appels vers terminal mobile destinée à retrouver une localisation de l'abonné par paquets à terminal mobile à partir du HLR (35) au moyen de l'information d'identification de l'abonné par paquets à terminal mobile et à obtenir une adresse de SGSN correspondante ; et
une unité de traitement de messages destinée à transmettre un message demandant l'initialisation de la connexion de l'appel vers le terminal mobile au SGSN (34) par l'intermédiaire de l'unité (33-1) de traitement d'entrée/sortie et d'adresse Internet.

3. Système selon la revendication 1 ou 2, dans lequel le GGSN (36) pour terminaux mobiles comprend :
une unité (35-1) de traitement d'entrée/sortie et d'adresse Internet destinée à exécuter les tâches Internet et l'acheminement ;
une unité (36-4) de traitement de messages destinée à recevoir et à traiter un message issu du SGSN (34) demandant une connexion de session ;
une unité (36-3) de gestion de session destinée à affecter l'adresse Internet à l'abonné par paquets à terminal mobile en conformité avec le message demandant la connexion de session, et à transmettre l'adresse Internet affectée avec l'information IMSI au serveur pour terminaux mobiles ; et
une unité (36-2) de traitement de messages du serveur pour terminaux mobiles destinée à transmettre un message demandant l'enregistrement de l'adresse Internet au serveur pour terminaux mobiles.

4. Système selon l'une quelconque des revendications 1 à 3, dans lequel le serveur (32) pour terminaux mobiles inclut :
une unité (32-1) de traitement des messages du DNS destinée à traiter les messages d'interrogation et les messages de réponse ;
une unité (32-2) de traitement des messages dû GGSN destinée à traiter les messages demandant l'initialisation de la connexion de l'appel par paquets vers le terminal mobile et l'enregistrement de l'adresse Internet ; et
une unité (32-3) de commande de conversion destinée à gérer l'information dynamique d'abonné dans la base de données et à convertir le nom de domaine de l'abonné par paquets à terminal mobile en l'adresse Internet en se basant sur l'information dynamique d'abonné dans la base de données.

5. Système selon l'une quelconque des revendications 1 à 4, dans lequel l'information dynamique d'abonné dans la base de données inclut un nom de domaine de l'abonné au service par paquets, une information IMSI, une information APN, une information d'état et une information d'adresse Internet affectée.

6. Procédé de traitement des appels par paquets vers un terminal mobile dans un réseau (300) de services radio par paquets, comprenant :
la transmission d'une interrogation du DNS destinée à obtenir une adresse Internet correspondant à un nom de domaine d'un abonné (38) par paquets à terminal mobile ;
**caractérisé par**
la recherche d'une information dynamique d'abonné dans une base de données, à un serveur (32) pour terminaux mobiles, en se basant sur un nom de domaine inclus dans l'interrogation du DNS de manière à retrouver les informations IMSI et APN de l'abonné (38) par paquets à terminal mobile, et la transmission des informations IMSI et APN à un GGSN (33) pour terminaux mobiles ;
la transmission des informations IMSI et APN de l'abonné (38) par paquets à terminal mobile et l'information d'adresse du serveur (32) pour terminaux mobiles depuis le GGSN (33) pour terminaux mobiles à un SGSN (34) ;
l'établissement de la connexion de l'appel par paquets vers un terminal mobile au SGSN (34) entre l'abonné (38) par paquets à terminal mobile et un GGSN (36) sélectionné au moyen des informations IMSI et APN et de l'information d'adresse du serveur (32) pour terminaux mobiles, dans lequel les informations IMSI et APN et l'information d'adresse sont reçues du GGSN (33) pour terminaux mobiles ;
au GGSN (36) sélectionné, l'affectation d'une adresse Internet à l'abonné (38) par paquets à terminal mobile, l'établissement d'une session pour l'appel par paquets vers le terminal mobile et la demande d'enregistrement de l'adresse Internet affectée ; et
au serveur (32) pour terminaux mobiles, l'enregistrement de l'adresse Internet affectée à l'abonné (38) par paquets à terminal mobile en tant qu'information dynamique d'abonné dans la base de données, et la transmission de l'adresse Internet enregistrée à un hôte Internet de manière à ce que le trafic de l'utilisateur puisse être transmis au moyen de l'adresse Internet enregistrée.

7. Procédé selon la revendication 6, comprenant en outre :
la recherche de l'information dynamique d'abonné dans la base de données au moyen de l'information de nom de domaine incluse dans l'interrogation du DNS, et quand il existe une adresse Internet affectée au nom de domaine, la transmission de l'adresse Internet à l'hôte Internet sans demande de conversion de l'adresse Internet.

8. Procédé selon la revendication 6 ou 7, comprenant en outre :
la détermination de ce qu'il existe ou non une session connectée pour l'information IMSI de l'abonné par paquets à terminal mobile, et quand il existe une session connectée pour l'information IMSI de l'abonné par paquets à terminal mobile, la transmission d'une information se rapportant à une adresse Internet affectée à l'abonné par paquets à terminal mobile et d'une information IMSI de l'abonné par paquets à terminal mobile au serveur (32) pour terminaux mobiles afin de demander l'enregistrement de l'adresse Internet.

9. Procédé selon l'une quelconque des revendications 6 à 8, comprenant en outre une demande d'initialisation de la connexion de l'appel par paquets vers un terminal mobile par :
la transmission de l'information IMSI de l'abonné (38) par paquets à terminal mobile au HLR (35), dans lequel l'information IMSI est reçue quand le serveur (32) pour terminaux mobiles demande l'initialisation de la connexion de l'appel par paquets vers le terminal mobile et la conversion de l'adresse Internet ;
la réception de l'information d'adresse du SSGN (34) où l'abonné (38) par paquets à terminal mobile est situé ; et
la demande l'initialisation de la connexion de l'appel par paquets vers le terminal mobile au SSGN (36) correspondant à l'information d'adresse de SSGN reçue.

10. Procédé selon l'une quelconque des revendications 6 à 9, dans lequel les procédures d'exécution pour la connexion de l'appel par paquets vers un terminal mobile entre l'abonné par paquets à terminal mobile et un GGSN (36) incluent :
la transmission des informations IMSI et APN et de l'information d'adresse du serveur pour terminaux mobiles reçues du GGSN (33) pour terminaux mobiles au terminal mobile (38) de l'abonné par paquets à terminal mobile correspondant afin de demander l'initialisation de la connexion de l'appel par paquets vers le terminal mobile ;
à l'abonné (38) par paquets à terminal mobile, la transmission des informations IMSI et APN et de l'information d'adresse du serveur (32) pour terminaux mobiles au SGSN (34) afin de demander l'établissement de la connexion par paquets ; et
au SGSN (34), la sélection du GGSN (36) pour la transmission du trafic de l'utilisateur en se basant sur l'information APN en conformité avec l'établissement de la connexion d'appel dynamique demandée, et la transmission des informations IMSI et APN de l'abonné par paquets à terminal mobile et de l'information d'adresse du serveur (32) pour terminaux mobiles au GGSN (36) sélectionné afin de demander la connexion de session pour l'établissement de l'appel par paquets vers terminaux mobiles.
